# EUROPEAN PATENT APPLICATION

(11) **EP 4 607 380 A1**
(43) Date of publication of application: **27.08.2025**
(21) Application number: 25151829.6
(22) Date of filing: 14.01.2025
(51) Int. Cl.: G06F 21/32, G06F 21/64, H04L 9/32, H04L 9/00, H04L 9/40, H04W 12/126, H04W 12/48, G06F 21/62, H04W 12/02, H04W 12/30

(54) **TRUSTLESS SUBSCRIBER REIDENTIFICATION AND SIM FRAUD PREVENTION USING BIOMETRICS AND BLOCKCHAINS**

(30) Priority: 22.02.2024 FI 20245219
(71) Applicant: Nokia Technologies Oy, 02610 Espoo (FI)
(72) Inventor: BOSKOV, Novak, Ludwigsburg (DE); JAJOO, Akshay, Tracy (US); BANERJEE, Avishek, Murray Hill (US); RAVI, Nirupama, Murray Hill (US)
(74) Representative: Nokia EPO representatives

(57) **Abstract**

According to an aspect, there is provided an apparatus for performing the following. The apparatus receives a smart contract template from a network node of a mobile network operator connected to a blockchain. A subscriber identity module of the apparatus has a subscription to a service of the mobile network operator. The apparatus creates, based on one or more biometric user inputs, a secure sketch. The apparatus generates a random seed and, based on the secure sketch and one or more further biometric user inputs, a first cryptographic key. The apparatus encrypts the random seed using the first cryptographic key to form ciphertext. The apparatus creates a transfer condition for a transfer of the subscription when an input matches the ciphertext. The apparatus appends the secure sketch, random seed, ciphertext and transfer condition to the smart contract template. The apparatus transmits the smart contract template to the network node.

## Description

### TECHNICAL FIELD

Various example embodiments relate to wireless communications.

### BACKGROUND

In subscriber identity module (SIM) swap frauds (or scams), the fraudster impersonates the victim and lures their mobile network operator (MNO) to transfer the victim's phone number to an attacker-controlled device (or SIM). The attackers often use sophisticated social engineering techniques in combination with comprehensive scanning of victims' online presence to collect the victim's personal data. In subsequent steps of the scheme, the attacker engages in communication with the victim's MNO and convinces them of their authenticity by presenting the collected personal data of the victim. The attacker typically justifies the phone number transfer by convincing the MNO that the original SIM card (or device) has been lost, stolen, or damaged. A successfully committed SIM swap fraud allows the attacker to hijack two-factor authentication in third-party services and impersonate the victim on the Internet.

Therefore, there is a need for a trustless subscriber reidentification solution for mitigating the risks of SIM swap frauds while keeping legitimate phone number transfers seamless for legitimate subscribers.

### SUMMARY

According to an aspect, there is provided the subject matter of the independent claims. Embodiments are defined in the dependent claims.

According to an aspect, there is provided a non-transitory computer readable medium having stored thereon instructions that, when executed by a computing device, cause the computing device to perform:
receiving a smart contract template from a network node of a mobile network operator communicatively connected to a blockchain, wherein a subscriber identity module of the computing device has a subscription to a service provided by the mobile network operator;
obtaining one or more biometric user inputs via at least one user input device comprised in the computing device and/or communicatively connected to the computing device;
creating a secure sketch based on the one or more biometric user inputs;
obtaining one or more further biometric user inputs via the at least one user input device;
generating a first cryptographic key and a random seed, wherein the generation of the first cryptographic key is based on the secure sketch and the one or more further biometric user inputs;
encrypting the random seed using the first cryptographic key to form ciphertext;
appending the secure sketch, the random seed and the ciphertext to the smart contract template;
creating a transfer condition for triggering a transfer of the subscription to another subscriber identity module as a smart contract trigger, wherein the transfer condition is defined to be satisfied when a received input matches the ciphertext;
appending the transfer condition to the smart contract template; and
transmitting the smart contract template, appended with the secure sketch, the random seed, the ciphertext and the transfer condition, to the network node of the mobile network operator for uploading a smart contract formed based on the transmitted smart contract template to the blockchain.

According to an aspect, there is provided a non-transitory computer readable medium having stored thereon instructions that, when executed by a computing device, cause the computing device to perform:
reading a secure sketch and a random seed from a smart contract comprised in a blockchain of a mobile network operator, wherein the smart contract is a contract between a subscriber of a service of the mobile network operator and the mobile network operator, and the secure sketch has been created based on one or more biometric user inputs of a user;
obtaining one or more biometric user inputs via at least one user input device;
generating a first cryptographic key based on the secure sketch and the one or more biometric user inputs;
encrypting the random seed using the first cryptographic key to form ciphertext; and
transmitting the ciphertext to the blockchain for activating a transfer condition in the smart contract comprised in the blockchain causing a transfer of a subscription to the service provided by the mobile network operator from a current subscriber identity module to the subscriber identity module of the computing device generating a smart contract template for a subscriber of a service provided by a mobile network operator associated with the computing device.

According to an aspect, there is provided a non-transitory computer readable medium having stored thereon instructions that, when executed by a computing device, cause the computing device to perform:
generating a smart contract template for a subscriber of a service provided by a mobile network operator;
transmitting the smart contract template to a terminal device comprising a subscriber identity module associated with the subscriber;
receiving, from the terminal device, the smart contract template appended with a secure sketch, a random seed, ciphertext and a transfer condition for triggering a transfer of the subscription to another subscriber identity module as a smart contract trigger, wherein the transfer condition is defined to be satisfied when a received input matches the ciphertext, and the ciphertext has been formed by encrypting the random seed using a first cryptographic key generated based on the secure sketch, created based on one or more biometric user inputs, and on one or more further biometric user inputs; and
uploading a smart contract formed based on the smart contract template to the blockchain.

One or more examples of implementations are set forth in more detail in the accompanying drawings and the description below. Other features will be apparent from the description and drawings, and from the claims.

### BRIEF DESCRIPTION OF THE DRAWINGS

Figure 1 illustrates a system to which some embodiments may be applied;
Figures 2 to 9 illustrate processes according to some embodiments; and
Figure 10 illustrates an apparatus according to some embodiments.

### DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some embodiments to be discussed employ the Diffie-Hellman key exchange protocol. In the following, a short summary of an exemplary execution of said protocol between a first device (e.g., a terminal device) and a second device (e.g., a network node) is provided. Initially, the first and second device communicate to agree on two public values: a large prime number (p) and a primitive root modulo (g). These two values form a shared cryptographic key. Then, the first and second devices generate, respectively, first and second private cryptographic keys. Moreover, the first device calculates a first public value *A* = *g^{a},* and the second device calculates a second public value *B = g^{b}.* The first device transmits the first public value *A* to the second device, and the second device transmits the second public value *B* to the first device. The first device calculates a shared secret s based on the received second public value and the first private key as *s* = *B^{a}* mod *p*, and the second device calculates the same shared secret s based on the received first public value and the second private key as *s* = *A^{b}* mod *p*. The shared secret s is used as a common symmetric cryptographic key for subsequent secure communication between the first and second devices.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs), Internet Protocol multimedia subsystems (IMS), rebel SIM (R-SIM) for code division multiple access (CDMA) technologies such as 1x and 1x evolution data optimized (1xEV-DO), global system for mobile communications (GSM) or any combination thereof.

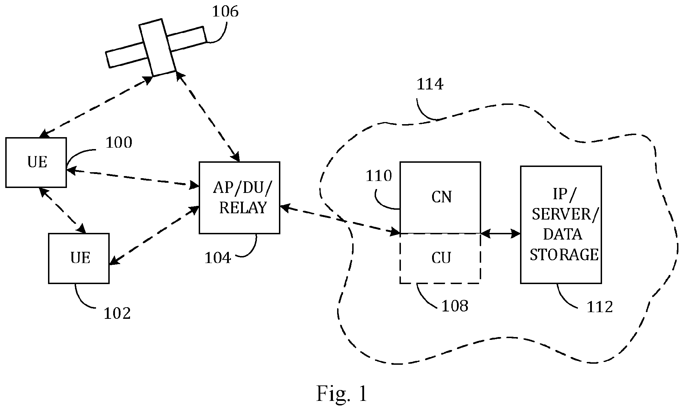

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

A communications system typically comprises more than one (e/g)NodeB 104 in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device 100, 102 (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device 100, 102 typically refers to a portable computing device that includes wireless mobile communication devices operating with or without a subscriber identity (or identification) module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. Here, the SIM may be a physical SIM which may be removable by a user or an embedded SIM (eSIM) embedded directly into the user device 100, 102 (and thus not being removable by a user). It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Thus, the user devices may not enable direct user interaction or may enable only limited user interaction (e.g., during setup). The user device (or in some embodiments a layer 3 relay node) is configured to perform one or more of user equipment functionalities. The user device may also be called a terminal device, a subscriber unit, mobile station, remote terminal, access terminal, user terminal or user equipment (UE) just to mention but a few names or apparatuses. Each user device 100, 102 may comprise one or more antennas.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into the RAN by utilizing network function virtualization (NVF) and software defined networking (SDN). Using edge cloud may mean access node operations to be carried out, at least partly, in a server, host or node operationally coupled to a remote radio head or unit (RU) or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a central or centralized unit, CU 108). Thus, in summary, the RAN may comprise at least one distributed access node comprising a central unit, one or more distributed units communicatively connected to the central unit and one or more (remote) radio heads or units, each of which is communicatively connected to at least one of the one or more distributed units.

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. 5G systems may also employ such capabilities. More generally, the actual (radio) communication system is envisaged to be comprised of one or more computer programs executed within a programmable infrastructure, such as general-purpose computing entities (servers, processors, and like).

The embodiments to be discussed below in detail are directed to solutions for mitigating risks of SIM swap frauds while enabling convenient swapping of SIMs by legitimate users. Thus, the terminal devices 100, 102 may be assumed to comprise, each, at least one SIM (e.g., a physical SIM or an eSIM), at least in some embodiments. As described above, in SIM swap frauds (or scams), the fraudster impersonates the victim and lures their MNO to transfer the victim's phone number to an attacker-controlled device (or SIM). The attackers often use sophisticated social engineering techniques in combination with comprehensive scanning of victims' online presence to collect the victim's personal data. In subsequent steps of the scheme, the attacker engages in communication with the victim's MNO and convinces them of their authenticity by presenting the collected personal data of the victim. The attacker typically justifies the phone number transfer by convincing the MNO that the original SIM card (or device) has been lost, stolen, or damaged. A successfully committed SIM swap fraud allows the attacker to hijack two-factor authentication in third-party services and impersonate the victim on the Internet

As mentioned above, current approaches to reidentification of a subscriber of an MNO for preventing SIM swap fraud rely on in-person or over-the-phone interaction between the MNO and the supposed subscriber that wants to transfer their phone number from one MNO to another. In this process, the supposed subscriber is challenged through several identification steps that may vary among MNOs. At least the following three problems are associated with such approaches:
1) Service disruption to potential victims of SIM swap frauds: For an honest subscriber initiating the process due to a lost or damaged device but not having all required identity proofs at hand, in-person or over-the-phone reidentification may cause disruption of service or business losses. In the case of eSIM, an automated phone number transfer may be supported but requires subscriber access to the device from which they want to transfer their number. The requirement of physical access to the "old device" renders eSIM-based solutions impractical in cases where said old device is lost or damaged.
2) The loss of privacy for subscribers and a high cost for MNOs: For the MNO to be able to verify the identity of a subscriber, the subscriber must share their private information with the MNO. For instance, the subscriber may need to share as much as their residence, nationality, age, or passport scans. On the other hand, an MNO that handles subscribes' private data accepts the high costs of maintaining complex data security measures to prevent breaches.
3) Complete reliance on third parties: In the case of sophisticated fraudsters who are able obtain a sufficient amount of victim information through social engineering, third-party methods may not suffice in stopping the fraud. By the time a fraudster attempts the SIM swap fraud, they may have already collected enough subscriber information from third parties (e.g., e-mail providers) for successfully carrying out the SIM swap.

Thus, based on the discussion of the previous paragraph, the main limitation of current SIM swap prevention standard operating procedures (SOPs) comprise 1) service disruption for the subscriber, 2) storage of the subscriber's private data (e.g., scans of identification documents, a social security number and/or an address) on the side of the MNO and 3) reliance on third parties for reidentification of the subscriber.

The embodiments to be discussed below overcome or alleviate all or at least some of the problems indicated above relating to SIM swap prevention.

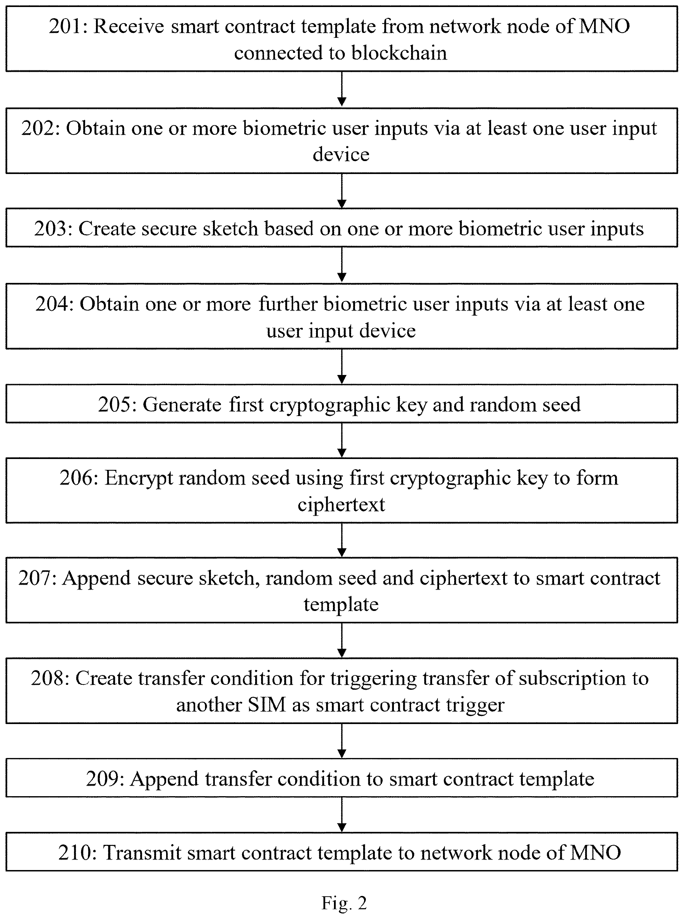

Figure 2 illustrates a process for enabling more secure SIM swapping according to embodiments. The process of Figure 2 may be carried out, e.g., by a terminal device such as one of the terminal devices 100, 102 of Figure 1. In the following, the entity carrying out the process of Figure 2 is called an apparatus for simplicity.

The apparatus carrying out the process of Figure 2 may be assumed to comprise a SIM. The SIM may be, for example, a physical SIM (or a physical SIM card) which may be removable by a user or a (software-based) SIM embedded or permanently installed directly into the apparatus (and thus being non-removable by a user). One example of the latter alternative is the embedded-SIM (eSIM). At the onset of the process of Figure 2, the SIM of the apparatus is assumed to have a subscription to a service provided by the MNO.

In some embodiments, the process of Figure 2 may be carried out by a particular application (or "app") installed to the apparatus. This application is called, in the following, a Swap Defeat application without loss of generality.

Referring to Figure 2, the apparatus receives, in block 201, a smart contract template. The smart contract template may be received from a network node of a mobile network operator (MNO). The smart contract template may be received via a radio access network (RAN).

According to a general definition, a smart contract is a self-executing contract with the terms of the agreement between parties being directly written into lines of code. A smart contract is a computer program that automatically enforces and executes the terms of a contract when predefined conditions are met. Smart contracts are typically deployed and run on blockchain platforms, which provide a decentralized and secure environment for their execution. A smart contract template is a template (or a draft) for a smart contract.

The network node of the MNO is assumed to be communicatively connected to a blockchain (either directly or via one or more further apparatuses or nodes). The network node may be configured to manage the blockchain (though it may not be the only apparatus capable of such functionality). The blockchain may be a blockchain of the MNO (i.e., a blockchain for storing information pertaining to the MNO or specifically subscriptions and/or subscribers of the MNO). According to a general definition, a blockchain is a distributed system that allows for 1) keeping an unalterable history of events, 2) distributed data storage without trusting a third party, and 3) distributed program execution without trusting a third party. As mentioned above, the programs that execute on a blockchain are called smart contracts and often serve to verify the execution of an agreement among multiple independent parties (here, between the subscriber and the MNO). Here, the blockchain may support a smart contract language in which the subscriber and MNO express their service agreement (i.e., the subscription). The blockchain may be configured to execute encrypted smart contracts homomorphically (in a privacy-preserving manner without decrypting the content of the smart contract).

In some embodiments, the blockchain may be permissioned with regulated subscriber access. Such a public blockchain would not jeopardize the integrity of smart contracts as they are executed homomorphically. Alternatively, the blockchain may be private.

In some embodiments, the smart contract template received in block 201 comprises MNO-filled information. The MNO-filled information may comprise, e.g., terms of service defined by the MNO and/or a mapping between a phone number of the subscriber and the SIM associated with the phone number. Said terms of service may have been negotiated between the MNO and the subscriber during a subscription creation process.

The apparatus obtains, in block 202, one or more biometric user inputs (or equally one or more biometric templates) of a user of the apparatus via at least one user input device. The at least one user input device may be or comprise biometric user input device(s), that is, user input device(s) suitable for reception of biometric user inputs. The at least one user input device may be comprised in the apparatus and/or communicatively connected to the apparatus. For correct operation of the process, if the one or more biometric user inputs (or templates) comprise a plurality of biometric user inputs (or templates), they all should relate to the same user. The obtaining of the one or more biometric user inputs may comprise capturing the one or more biometric user inputs using the apparatus and/or using the apparatus connected to an external capturing device (e.g., a scanning device). The obtaining (or capturing) of each or at least some of the one or more biometric inputs may be triggered in response to receiving a corresponding user selection in a graphical user interface (GUI) of the Swap Defeat application. To provide a concrete example, the GUI of the Swap Defeat application may show a virtual (command) button, pushable using a touchscreen, for initiating a face scan. Alternatively, the Swap Defeat application may be defined to enable initiating of the face scan by pushing on a physical button of the apparatus.

The one or more biometric user inputs may be biometric user inputs relating to measurements of morphological identifiers (e.g., a fingerprint, a palmprint, a hand shape, a hand size, a finger shape, a finger size, a finger vein pattern, a palm vein pattern, an ear shape, an iris of an eye, a retina of an eye and a face shape) and/or behavioral measurements (e.g., a voice measurement). The one or more biometric user inputs may comprise at least one of a face scan or photo, a fingerprint scan, an iris scan, a retina scan, a hand photo or scan, a palmprint scan, a palm vein scan, a finger vein scan, an ear photo or a voice sample. In some embodiments, the one or more biometric user inputs may comprise a plurality of biometric user inputs of the same type (e.g., multiple face photos or multiple fingerprints of the same finger or different fingers). In some embodiments, the one or more biometric user inputs comprise at least one face scan or photo and/or at least one fingerprint scan. Each of the one or more biometric user inputs may correspond quantized (i.e., discretized) data acquired using a quantizer with a certain step size. In some embodiments, the one or more biometric user inputs may comprise at least one behavioral biometric user input describing a typing style, a social media post pattern, a walking gait, a gesture, a mouse movement and/or a finger movement of a user.

The at least one user input device may comprise at least one of: at least one camera, at least one touchscreen, at least one scanning device (e.g., an iris scanner, a fingerprint scanner, a palm scanner or a palm vein scanner) or at least one microphone. The at least one scanning device may comprise at least one infrared scanning device and/or at least one optical scanning device. The at least one user input device may comprise one or more user input devices comprised in the apparatus (e.g., camera(s) and/or microphone(s) of a smart phone or a tablet computer) and/or one or more user inputs devices (communicatively) connected to the apparatus (e.g., a separate scanning device such as a fingerprint, iris or retina scanner).

The apparatus creates, in block 203, a secure sketch based on the one or more biometric user inputs. The secure sketch is created in block 203 effectively by applying a secure sketch algorithm to the one or more biometric user inputs (i.e., one or more biometric templates).

According to a general definition, a secure sketch is a cryptographic technique or protocol that enables creation of cryptographic keys starting from biometric templates such as fingerprints and face scans. The term "sketch" in this context refers to the condensed representation of the biometric data. A secure sketch contains condensed information that retains the essential features needed for authentication. A secure sketch itself does not leak information about the biometric templates that have been used in the construction of the secure sketch. Thus, publishing the secure sketch does not compromise the confidentiality of the cryptographic key. The process of creating a secure sketch may involve, for example, techniques like fuzzy extractors, error-correcting codes, or other cryptographic methods to ensure that small variations in the biometric data still result in similar secure sketches. The creation of the secure sketch may, for example, be based on use of singular value decomposition applied on the one or more biometric user inputs (e.g., on one or more face images) to determine significant identity information of the user. For example, the secure sketch may be created in block 203 using a relative entropy loss based scheme described in Q. Li, Y. Sutcu, and N. Memon, "Secure sketch for biometric templates," Advances in Cryptology - ASIACRYPT 2006, pp. 99-113, 2006. doi:10.1007/11935230_7. In said scheme, biometric samples (i.e., biometric user inputs) are mapped to a quantized space. Then, each piece of biometric data in the quantized spaced is mapped to the nearest code word in a pre-defined code book. Finally, the secure sketch is constructed by calculating, for each piece of biometric data, a distance between a piece of biometric data and its nearest code word in the pre-defined code book. Some other examples of schemes for calculating the secure sketch are provided in Y. Dodis, R. Ostrovsky, L. Reyzin, and A. Smith, "Fuzzy extractors: How to generate strong keys from biometrics and other noisy data," SIAM Journal on Computing, vol. 38, no. 1, pp. 97-139, 2008. doi: 10.1137/060651380.

The apparatus obtains, in block 204, one or more further biometric user inputs (or equally one or more further biometric templates) of the user of the apparatus via the at least one user input device (i.e., the same at least one user input device as used in block 202). In general, this step may be carried out similar to as described in connection with block 202. Thus, for example, the type(s) and/or number of the one or more further biometric user inputs may be the same as the type(s) and/or number of the one or more biometric user inputs of block 202. The one or more further biometric user inputs should ideally match the one or more biometric inputs as closely as possible (though allowance should be made for some natural variation).

In some embodiments, block 204 may directly follow block 202.

The apparatus generates, in block 205, a first cryptographic key based on the secure sketch and the one or more further biometric user inputs. Moreover, the apparatus generates, in block 205, a random seed. The generation of the first cryptographic key may be performed using a key derivation function (KDF) which takes as input at least the secure sketch and the one or more biometric user inputs. The KDF may be defined so that small natural variations in the one or more further biometric user inputs (e.g., different lighting, hairstyle or makeup in photos or small discrepancies in fingerprint scans caused by, e.g., skin condition, temperature, humidity or sweating) still result in the same first cryptographic key. The random seed may be generated, for example, based on the state of the apparatus (e.g., user interaction, timing of system events, entropy associated with any sensors of the apparatus or a combination thereof). Alternatively, the random seed may be generated based on a cryptographically secure pseudorandom number generator (PRNG) or a hardware random number generator. A hardware random number generator (equally called a true random number generator (TRNG), a non-deterministic random bit generator (NRBG), or a physical random number generator) is a device that generates random numbers from a physical process capable of producing entropy (in other words, the device always has access to a physical entropy source), unlike the PRNG which utilizes a deterministic algorithm and non-physical nondeterministic random bit generators that do not include hardware dedicated to generation of entropy.

The apparatus encrypts, in block 206, the random seed using the first cryptographic key to form ciphertext (i.e., the encrypted random seed). The encryption in block 206 may be performed using an encryption algorithm (or a cipher) taking as inputs the random seed (i.e., the plaintext data to be encrypted) and the first cryptographic key.

The apparatus appends (or adds), in block 207, the secure sketch, the random seed and the ciphertext to the smart contract template. The smart contract template may comprise dedicated sections for storing the random seed and the ciphertext (which may have been tagged or indicated by the network node of the MNO).

The apparatus creates, in block 208, a transfer condition for triggering a transfer of the subscription to another SIM as a smart contract (transfer) trigger. The transfer condition may be defined to be satisfied when a received input matches the ciphertext. When the transfer condition (i.e., the smart contract trigger) is satisfied, the subscription (and thus the associated phone number) will be transferred to a new SIM (and a call to destruct the current smart contract on the blockchain is made), as will be discussed in further detail in connection with following embodiments.

The apparatus appends, in block 209, the transfer condition to the smart contract template. The smart contract template may comprise a dedicated section for storing the transfer condition (which may have been tagged or indicated by the network node of the MNO).

The apparatus transmits, in block 210, the smart contract template appended with the secure sketch, the random seed, the ciphertext and the transfer condition to the network node of the MNO. Subsequently, upon receiving the appended smart contract template, the network node may upload (possibly following further appending and encryption) a smart contract formed based on the smart contract template to the blockchain.

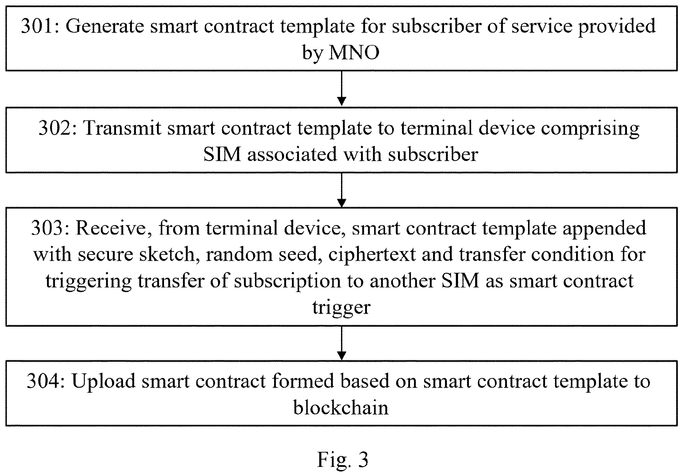

Figure 3 illustrates a process for enabling more secure SIM swapping according to embodiments. The process of Figure 3 may be carried out, e.g., by a network node of an MNO. Said network node may correspond, e.g., to element 112 of Figure 1. In the following, the entity carrying out the process of Figure 3 is called an apparatus for simplicity. The apparatus is assumed to be connected to a blockchain (of the MNO) and capable of uploading information to it.

The process of Figure 3 may be carried out by the network node in parallel with the process of Figure 2 being carried out at the terminal device. Thus, any of the properties and definitions may apply, *mutatis mutandis,* also here.

Referring to Figure 3, the apparatus initially generates, in block 301, a smart contract template for a subscriber of a service provided by an MNO associated with the apparatus.

In some embodiments, the generated smart contract may comprise MNO-filled information. Said MNO-filled information may comprise terms of service defined by the mobile network operator and/or a mapping between a phone number of a subscriber and the subscriber identity module associated with the phone number. Additionally or alternatively, the generated smart contract may comprise (empty) sections tagged or indicated as being intended for terminal device defined information. This terminal device defined information may comprise at least a secure sketch, a random seed, ciphertext (i.e., the encrypted random seed) and a transfer condition, as described in connection with Figure 2.

The apparatus transmits, in block 302, the smart contract template to a terminal device comprising a SIM associated with said subscriber. The smart contract template may be transmitted via a radio access network (RAN). Upon receiving the smart contract, the terminal device may carry out the process of Figure 2.

The apparatus receives, in block 303, from the terminal device, the smart contract template appended with a secure sketch, a random seed, ciphertext and a transfer condition for triggering a transfer of the subscription to another subscriber identity module as a smart contract trigger. The transfer condition is defined to be satisfied when a received input matches the ciphertext. As described in connection with Figure 2, the secure sketch has been created based on one or more biometric user inputs of the user of the terminal device, and the ciphertext has been formed by encrypting the random seed using a first cryptographic key which has been generated based on the secure sketch and one or more further biometric user inputs of the user.

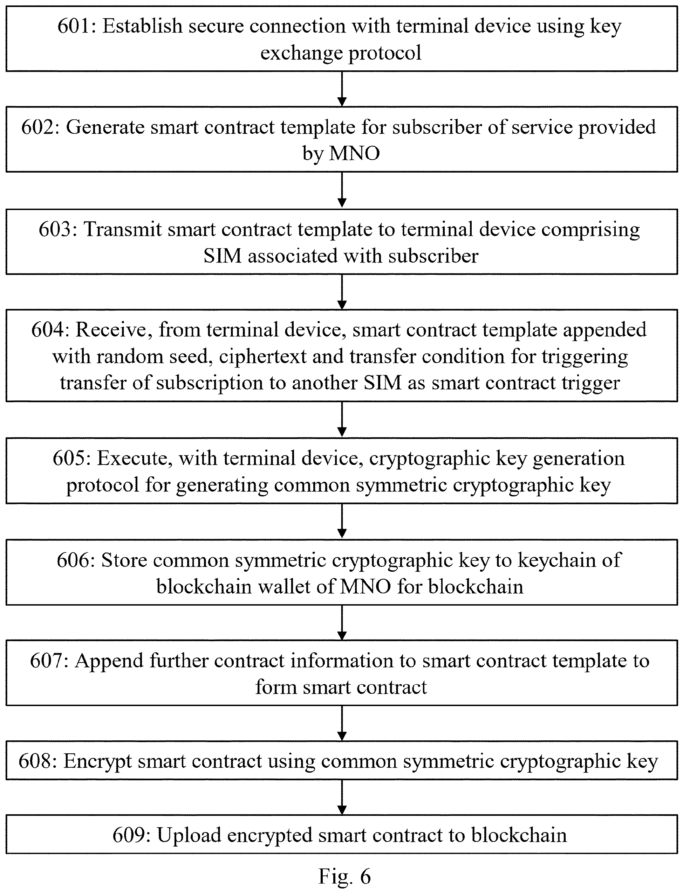

The apparatus uploads, in block 304, a smart contract formed based on the smart contract template to the blockchain. The smart contract may correspond (substantially) to the received smart contract template. Alternatively, it may comprise additional information added by the apparatus following the reception of block 303. The smart contract may be uploaded to the blockchain in an encrypted form. These functionalities are discussed in further detail in connection with Figure 6.

As described in connection with Figure 2, the blockchain may support homomorphic encryption meaning that the blockchain is capable of performing computations on encrypted data without decrypting it.

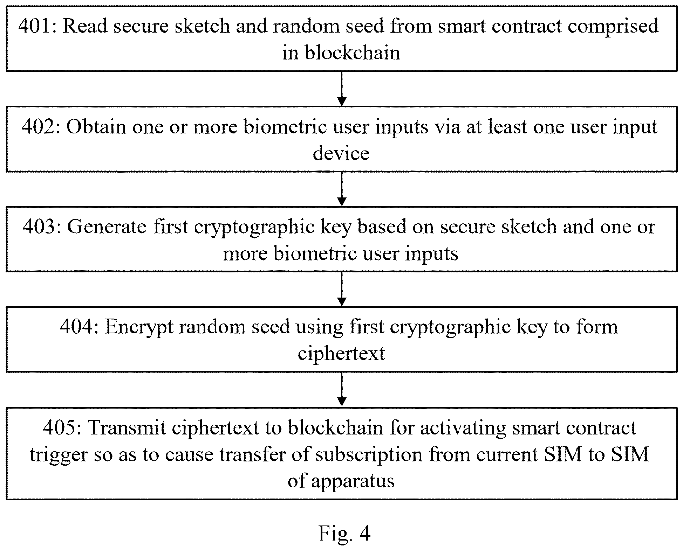

Figure 4 illustrates a process for transferring a subscription to a service provided by an MNO from an old SIM to a new SIM according to embodiments. The process of Figure 4 may be carried out, e.g., by a terminal device such as one of the terminal devices 100, 102 of Figure 1. In the following, the entity carrying out the process of Figure 4 is called an apparatus for simplicity.

The apparatus carrying out the process of Figure 4 may be assumed to comprise a SIM. The SIM may be, for example, a physical SIM (or a physical SIM card) which may be removable by a user or a (software-based) SIM embedded or permanently installed directly into the apparatus (and thus being non-removable by a user). One example of the latter alternative is the embedded-SIM (eSIM). It may be assumed that, at the onset of the process of Figure 4, the SIM of the apparatus has no subscription to a service provided by the MNO.

In some embodiments, the process of Figure 4 may be carried out using the Swap Defeat application installed to the apparatus.

Referring to Figure 4, it is assumed initially that a smart contract between a subscriber of a service of the MNO and the MNO has been previously uploaded to a blockchain of the MNO. The smart contract comprises a secure sketch created based on one or more biometric user inputs of a user, a random seed, ciphertext (i.e., encrypted random seed) and a transfer condition (i.e., a smart contract trigger) for triggering a transfer of a subscription from a current SIM to another SIM. The transfer condition is defined to be satisfied when a received input matches the ciphertext of the smart contract. The smart contract may have been uploaded to the blockchain by an apparatus (e.g., a terminal device), comprising a different SIM compared to the SIM of the present apparatus, carrying out the process of Figure 2 and a network node of the MNO carrying out the process of Figure 3. Said apparatus which carried out the process of Figure 2 may be the same apparatus which executes the process of Figure 4, apart from comprising a different SIM. Here, it is assumed that the SIMs involved in the transfer are physical removable SIMs. Alternatively, said apparatus which carried out the process of Figure 2 may be a different apparatus compared to the apparatus executing the process of Figure 4.

The apparatus reads, in block 401, the secure sketch and the random seed (associated with the subscriber) from the smart contract comprised in the blockchain of the MNO.

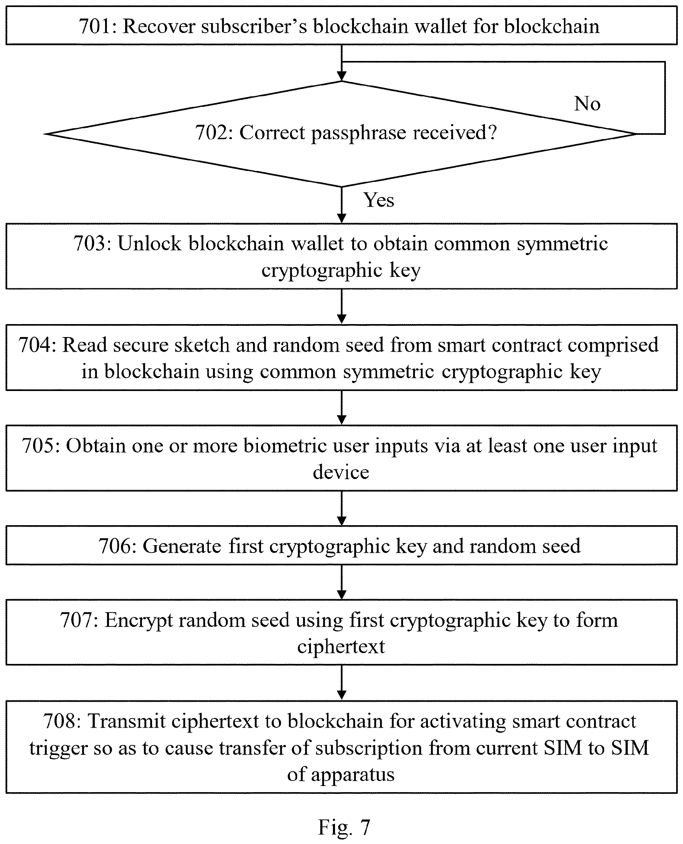

In some embodiments, the smart contract stored in the blockchain may have been encrypted using a common symmetric cryptographic key. In such embodiments, the reading of the smart contract in the blockchain may be carried out using the common symmetric cryptographic key which was obtained by the apparatus before the reading, for example, by unlocking a blockchain wallet for the blockchain comprising said common symmetric cryptographic key. This functionality is described in further detail below in connection with Figure 7.

The apparatus obtains, in block 402, via at least one (biometric) user input device, one or more biometric user inputs of the user of the apparatus. The user of the apparatus is assumed here to be the same user who provided the one or more biometric user inputs for creating the secure sketch comprised in the smart contract as well as the one or more further biometric user inputs used in encrypting the random seed. Thus, ideally, the one or more biometric user inputs obtained in block 402 should substantially match the one or more biometric user inputs and the one or more further biometric user inputs described in connection with blocks 202, 204 of Figure 2.

The apparatus generates, in block 403, a first cryptographic key based on the secure sketch and the one or more biometric user inputs. The first cryptographic matches the first cryptographic key discussed in connection with Figure 2 as the secure sketch describes the same user which is depicted by the one or more biometric user inputs.

The apparatus encrypts, in block 404, the random seed using the first cryptographic key to form ciphertext. As the random seed is the same random seed which was encrypted for generating the ciphertext of the smart contract and the first cryptographic also matches the cryptographic key used for generating the ciphertext of the smart contract, the formed ciphertext also matches the ciphertext contained in the smart contract.

The steps of blocks 402 to 404 may be carried out as described in connection with blocks 204 to 206 of Figure 2 with the only difference being that here the secure sketch and the random seed are read from the smart contract in the blockchain, not generated by the apparatus itself like described in connection with blocks 204, 205 of Figure 2. In other words, here the first cryptographic key is generated, in block 403, based on a secure sketch generated earlier by the terminal device which took part in creation of the smart contract and one or more biometric user inputs obtained via the present apparatus. Moreover, the random seed which is encrypted in block 206 is a random seed which was generated earlier by the terminal device which took part in creation of the smart contract.

The apparatus transmits, in block 405, the ciphertext to the blockchain for activating the transfer condition in the smart contract causing a transfer of a subscription to the service provided by the MNO from a current SIM to the SIM of the apparatus. Thus, the MNO and the subscriber will subsequently employ the same smart contract as previously created except that now the phone number of the subscriber is associated with the new SIM. Activating the transfer condition in the smart contract may also cause creation of a call to destruct the current smart contract on the blockchain.

It should be noted that the apparatus may have access only to certain parts of the smart contract (namely, the parts containing the secure sketch and the random seed). Thus, while the ciphertext is also stored in the smart contract comprised in the blockchain, the apparatus may be prevented from reading said ciphertext directly from the smart contract in the blockchain.

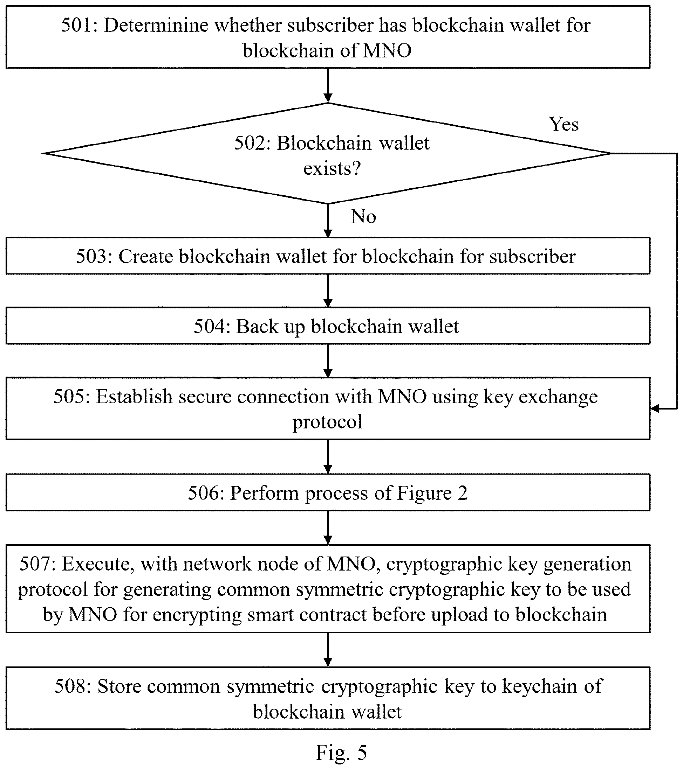

Figure 5 illustrates another process for enabling more secure SIM swapping according to embodiments. The process of Figure 5 corresponds to a more detailed implementation of the process of Figure 2 described above. Thus, also the process of Figure 5 may be carried out, e.g., by a terminal device such as one of the terminal devices 100, 102 of Figure 1. In the following, the entity carrying out the process of Figure 5 is called an apparatus for simplicity. The apparatus carrying out the process of Figure 5 may be assumed to comprise a SIM (e.g., a physical SIM or an eSIM), similar to as described in connection with Figure 2. In some embodiments, the process of Figure 5 may be carried out using the Swap Defeat application installed to the apparatus.

Similar to as described in connection with Figure 2, also here the SIM of the apparatus is assumed to have a subscription to a service provided by the mobile network operator. The apparatus determines, in block 501, whether said subscriber has a blockchain wallet for a blockchain of the MNO.

According to a general definition, a blockchain wallet is a digital wallet that allows users to securely interact with a blockchain. It should be noted that while the term "blockchain wallet" is used commonly specifically in connection with cryptocurrencies, here the blockchain wallet is not used for managing cryptocurrencies or for other financial or business purposes but for enabling access to a blockchain in a more general sense.

In response to the subscriber failing to have a blockchain wallet for the blockchain in block 502, the apparatus creates, in block 503, a blockchain wallet for the blockchain for the subscriber. The blockchain wallet may be a software blockchain wallet. The creation of the blockchain wallet comprises at least generating a public-private key pair for the subscriber for asymmetric cryptography. The public-private key pair comprises a public cryptographic key (which may be shared openly) and a private cryptographic key (which is to be kept secret) for enabling interaction with the blockchain. The public-private key pair are stored to a keychain of the blockchain wallet. In addition to these two keys, the blockchain wallet may also hold other cryptographic keys. The blockchain wallet may be protected using a passphrase. The passphrase may be defined by the user of the apparatus (i.e., the subscriber) as a part of the blockchain wallet creation process.

The apparatus backs up, in block 504, the blockchain wallet (or causes backing up of the blockchain wallet or at least enables backing up of the blockchain wallet by a user). The blockchain wallet may be back up to a cloud or an external portable data storage device connected to the apparatus (e.g., directly via an appropriate port and/or via a cable and/or wirelessly) or to a hardware cold wallet connected to the apparatus (e.g., via Bluetooth or near-field communication, NFC, pairing). The blockchain wallet may be backed up in an encrypted form. The external portable data storage device may be, for example, a universal serial bus (USB) memory (equally called a USB stick or a USB flash drive), a portable hard drive, a solid state drive or a memory card such as a secure digital (SD) card or a microSD card.

In some embodiments, block 504 or even blocks 501 to 504 may be omitted (e.g., if it is known that the subscriber already has a blockchain wallet for the blockchain).

In response to the subscriber already having a blockchain wallet for the blockchain in block 502, the process skips steps 503, 504 and proceeds directly to block 505.

The apparatus establishes, in block 505, a secure connection (or equally a secure communication channel) with the network node of the MNO using a key exchange protocol (or algorithm). The key exchange protocol employs or is based on the public-private key pair comprised in the blockchain wallet of the subscriber and a public-private key pair comprised in a blockchain wallet of the MNO. The apparatus may not have access to the public-private key pair of the MNO. The key exchange protocol may be, for example, based on the Diffie-Hellman key exchange protocol which is a well-known method for enabling two parties to securely agree on a shared secret cryptographic key over an insecure communication channel. Other alternatives for the key exchange protocol or algorithm comprise quantum-resistant key exchange algorithms such as Ring Learning With Errors (RLWE), Kyber, NTRUEncrypt, FrodoKEM and NewHope.

In some embodiments, the establishing of the secure connection in block 505 may comprise, as an initial step, transmitting, by the apparatus to the network node of the MNO, an initial enrollment message for triggering the establishing of the secure connection at the network node. Upon receiving the initial enrollment message, the network node of the MNO may initiate establishing of the secure connection at the MNO end. The initial enrollment message may indicate enrollment to the Swap Defeat application. The initial enrollment message may have no payload.

In block 506, the apparatus carries out the actions described above in connection with Figure 2. However, the receiving and the transmitting of the smart contract template (blocks 201 & 210 of Figure 2) may be performed, in this case, using the secure connection (i.e., secure communication channel) established in block 505. In some alternative embodiments, block 505 may be omitted and thus an insecure connection may be used for the receiving and the transmitting of the smart contract template.

Following the transmission of the smart contract template appended with a secure sketch, a random seed, ciphertext (i.e., the encrypted random seed) and a transfer condition in block 506 (i.e., in block 210 of Figure 2), the apparatus executes, in block 507, with the network node of the MNO, a cryptographic key generation protocol for generating a common symmetric cryptographic key to be used by the MNO for encrypting a smart contract (corresponding to the transmitted smart contract template) before it is uploaded to the blockchain. The cryptographic key generation protocol may be, for example, the Diffie-Hellman key exchange protocol. The cryptographic key generation protocol may be carried out using the secure connection established in block 505.

The apparatus stores, in block 508, the common symmetric cryptographic key to the key chain of the blockchain wallet defined for the blockchain. Subsequently, the stored common symmetric cryptographic key may be used by the apparatus or by another apparatus which has recovered the blockchain wallet of the subscriber for accessing the smart contract comprised in the blockchain.

In some embodiments, blocks 507, 508 may be omitted.

Figure 6 illustrates another process for enabling more secure SIM swapping according to embodiments. The process of Figure 6 corresponds to a more detailed implementation of the process of Figure 3 described above. Thus, also the process of Figure 6 may be carried out, e.g., by a network node of an MNO. Said network node may correspond, e.g., to element 112 of Figure 1. The process of Figure 6 may be carried out by the network node in parallel with the process of Figure 5 carried out at the terminal device. In the following, the entity carrying out the process of Figure 6 is called an apparatus for simplicity. The apparatus is assumed to be connected to a blockchain (of the MNO) and capable of uploading information to it.

Referring to Figure 6, it may be initially assumed that the apparatus has access to a blockchain wallet of the MNO for a blockchain associated with the MNO. The process of Figure 6 is initiated by the apparatus establishing, in block 601, a secure connection (or equally a secure communication channel) with a terminal device using a key exchange protocol employing a public-private key pair comprised in the blockchain wallet of the MNO and a public-private key pair comprised in a blockchain wallet of a subscriber to a service provided by the MNO associated with the apparatus. The apparatus may not have access to the public-private key pair of the subscriber. The key exchange protocol may be, for example, the Diffie-Hellman key exchange protocol. The terminal device is assumed to comprise a SIM associated with the subscriber.

In some embodiments, the establishing of the secure connection in block 601 may be initiated in response to receiving an initial enrollment message from the terminal device, as described above.

Then, the apparatus generates, in block 602, a smart contract template for the subscriber, transmits, in block 603, the smart contract template to the terminal device comprising a subscriber identity module associated with the subscriber and receives, in block 604, from the terminal device, the smart contract template appended with a secure sketch, a random seed, ciphertext and a transfer condition for triggering a transfer of the subscription to another SIM as a smart contract trigger, similar to as described previously in connection with blocks 301, 302, 303 of Figure 3.

The apparatus executes, in block 605, with the terminal device, a cryptographic key generation protocol for generating a common symmetric cryptographic key. The cryptographic key generation protocol may be, for example, the Diffie-Hellman key exchange protocol. The cryptographic key generation protocol may be carried out using the secure connection established in block 501.

The apparatus stores, in block 606, the common symmetric cryptographic key to the keychain of the blockchain wallet of the MNO. Subsequently, the stored common symmetric cryptographic key may be used by the apparatus for accessing the smart contract comprised in the blockchain.

The apparatus appends, in block 607, further contract information to the smart contract template received in block 604. This further contract information may be information which the MNO does not want to share with the subscriber. The further contract information may comprise, for example, a smart contract termination policy for the smart contract and/or a transfer embargo period for transferring the subscription (i.e., a period during which the transfer is not allowed). The smart contract termination policy may be an unconditional smart contract revocation trigger for invoking smart contract destruction. The network node of the MNO (or some other MNO entity) may unilaterally revoke the smart contract at any time by to firing said smart contract revocation trigger. The transfer embargo period may start at the time instance of subscription creation and end at the earliest time the subscriber is allowed to activate the subscription transfer. Following the appending in block 604, the smart contract template may be considered finalized, that is, the smart contract is ready.

In some embodiments, actions pertaining to block 607 may be carried out already before actions pertaining blocks 605, 606.

In some embodiments, block 607 may be omitted. In such embodiments, the smart contract template received in block 604 may be considered a finalized smart contract.

The apparatus encrypts, in block 608, the smart contract (i.e., the finalized smart contract template) using the common symmetric cryptographic key. The encrypting in block 608 may be performed using a symmetric encryption algorithm such as AES (Advanced Encryption Standard), DES (Data Encryption Standard) or 3DES (Triple DES). The result of the encryption is a ciphertext for the smart contract (i.e., the encrypted smart contract).

The apparatus uploads, in block 609, the encrypted smart contract to the blockchain of the MNO. As described in connection with Figure 2, the blockchain may support homomorphic encryption meaning that the blockchain is capable of performing computations even on the encrypted smart contract without decrypting it. This enables correct execution of the smart contract while keeping the contents of the smart contract accessible only to ones who are capable of decrypting the smart contract (i.e., the contents of the smart contract are not accessible by everyone who has access to the blockchain).

Figure 7 illustrates another process for transferring a subscription to a service provided by an MNO from an old SIM to a new SIM according to embodiments. The process of Figure 7 corresponds to a more detailed implementation of the process of Figure 4 described above. Thus, the process of Figure 7 may be carried out, e.g., by a terminal device such as one of the terminal devices 100, 102 of Figure 1. In the following, the entity carrying out the process of Figure 7 is called an apparatus for simplicity. The apparatus carrying out the process of Figure 7 may be assumed to comprise a SIM (e.g., a physical SIM or an eSIM), similar to as described in connection with Figure 4. It may be assumed that, at the onset of the process of Figure 7, a SIM of the apparatus has no subscription to a service provided by the MNO. In some embodiments, the process of Figure 7 may be carried out using the Swap defeat application installed to the apparatus.

Referring to Figure 7, it is assumed initially that a smart contract between a subscriber of a service of the MNO and the MNO has been previously uploaded to a blockchain of the MNO. The smart contract comprises a secure sketch created based on one or more biometric user inputs of a user, a random seed and a transfer condition (i.e., a smart contract trigger) for triggering a transfer of a subscription from a current SIM to another SIM. The transfer condition is defined to be satisfied when a received input matches the ciphertext of the smart contract. The smart contract may have been uploaded to the blockchain by a terminal device, which comprises a different SIM compared to the SIM of the present apparatus, carrying out the process of Figure 5 and a network node of the MNO carrying out the process of Figure 6. Additionally, it is assumed here that a common symmetric cryptographic key has been stored to a keychain of a blockchain wallet of the subscriber (and to a keychain of a blockchain wallet of the MNO). The blockchain wallet is protected using a passphrase of the subscriber.

The apparatus recovers (or restores), in block 701, the blockchain wallet of the subscriber for the blockchain from a cloud, an external portable data storage device connected to the apparatus or a hardware cold wallet connected to the apparatus. As mentioned above, the blockchain wallet comprises the common symmetric cryptographic key and is associated with the subscriber of the service provided by the MNO.

As mentioned above, the recovered blockchain wallet is protected using a passphrase defined by the subscriber. In response to receiving, as user input, a (correct) passphrase of the blockchain wallet in block 702, the apparatus unlocks, in block 703, the blockchain wallet to obtain the common symmetric cryptographic key. The user of the apparatus may be prompted to input the passphrase by the Swap Defeat application. The user input may be received via a user input device (e.g., a touchscreen or a keyboard).

The following steps 704 to 708 of the process of Figure 7 may correspond fully blocks 401 to 405 of Figure 4 discussed above.

Thus, by virtue of encryption and use of a secure sketch, the smart contract transfer trigger will fire, in this case, only when a user of the apparatus presents 1) the biometric data of the user that participated in the original subscription creation and 2) the passphrase of the blockchain wallet of the user that participated in the subscription creation. Under reasonable assumptions, only the same user who participated in the subscription creation will have access to the necessary information and can thus access the smart contract transfer trigger.

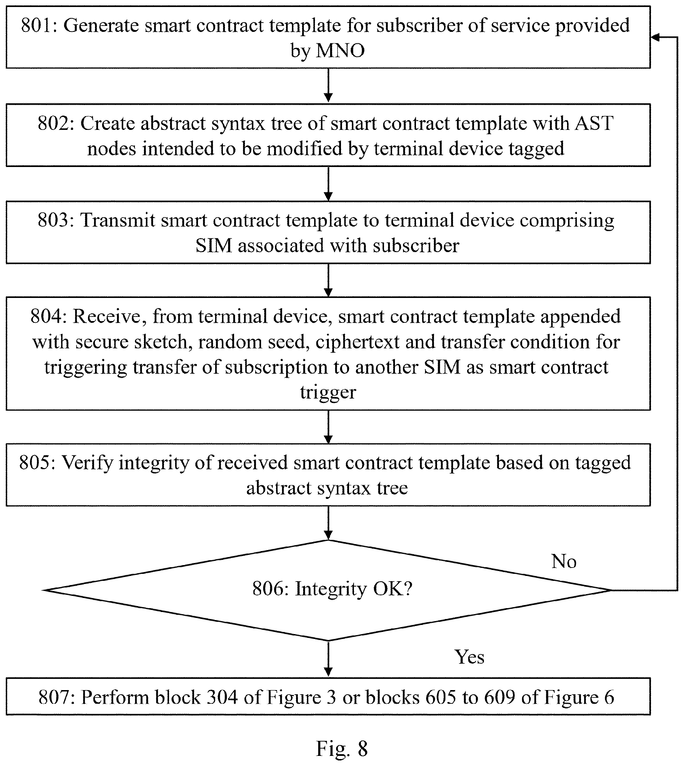

Figure 8 illustrates another process for enabling more secure SIM swapping according to embodiments. The process of Figure 8 corresponds to a variation of the processes of Figure 3 and 6 described above containing additional integrity verification functionalities. Thus, also the process of Figure 8 may be carried out, e.g., by a network node of an MNO. Said network node may correspond, e.g., to element 112 of Figure 1. The process of Figure 8 may be carried out by the network node in parallel with the process of Figure 2 or 5 carried out at the terminal device. In the following, the entity carrying out the process of Figure 8 is called an apparatus for simplicity. The apparatus is assumed to be connected to a blockchain (of the MNO) and capable of uploading information to it.

The process of Figure 8 starts, similar to the process of Figure 3, by the apparatus generating, in block 801, a smart contract template for a subscriber of a service provided by the MNO. Block 801 may correspond to block 301 of Figure 3 and/or block 602 of Figure 6.

The apparatus creates, in block 802, an abstract syntax tree (AST) of the smart contract template and tags, also in block 802, AST nodes that are intended for the terminal device (i.e., the user thereof) to fill out. Said tagged AST nodes may correspond sections to which a secure sketch, a random seed, ciphertext associated with the random seed and a transfer condition are to be appended. The terminal device should not modify other sections of the smart contract template (e.g., the MNO-filled information). The apparatus may store the tagged AST to a memory.

Thereafter, the transmitting of the smart contract template to a terminal device and subsequent receiving of the appended smart contract template from the terminal device in blocks 803, 804 may be carried out by the apparatus as described above in connection with blocks of 302, 304 of Figure 3 and/or blocks 603, 604 of Figure 6. In some embodiments, a secure connection may be established between the apparatus and the terminal device before the transmitting of the smart contract template, similar to as described in connection with block 601 of Figure 6.

Following the reception of the appended smart contract template from the terminal device, the apparatus verifies, in block 805, the integrity of the smart contract template based on the tagged AST. Namely, the apparatus may check whether MNO-filled information and/or other non-tagged information which the terminal device shouldn't have modified has been changed in the appended smart contract template by running a tree comparison procedure. The tree comparison procedure may compare AST nodes of the previously created AST, ignoring the tagged AST nodes, to corresponding AST nodes of an AST created based on the appended smart contract template received from the terminal device. This AST-based technique may be considered sufficiently efficient for most practical purposes as, in the worst case, the time for the apparatus to check the integrity of the smart contract template is linearly related to the size of the smart contract template (i.e., the size of the corresponding AST).

The apparatus checks, in block 806, whether the result of the integrity check is positive or negative. If the integrity check fails (i.e., the result is negative) in block 806, apparatus restarts the subscription creation process (i.e., the process goes back to block 802) or reject the service to the terminal device. This technique is sufficiently efficient as, in the worst case, the time for the MNO to check the integrity of the smart contract template is linear in the size of the smart contract template (i.e., the size of the corresponding AST).

If the integrity check is successful (i.e., the result is positive) in block 806, the apparatus proceeds, in block 807, to perform actions described previously in connection with block 304 of Figure 3 or blocks 605 to 609 of Figure 6.

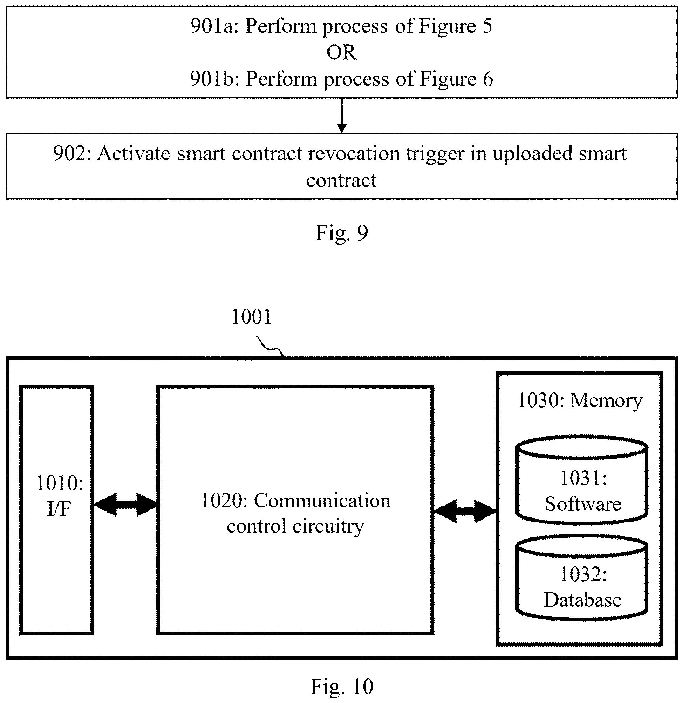

Figure 9 illustrates a process for user/MNO-triggered subscription revocation (or equally smart contract termination or revocation) according to embodiments. The process of Figure 9 may be carried out, e.g., by a terminal device such as one of the terminal devices 100, 102 of Figure 1 or by a network node of an MNO. Said network node may correspond, e.g., to element 112 of Figure 1. If the apparatus carrying out the process is a terminal device, the apparatus may be assumed to comprise a SIM (e.g., a physical SIM or an eSIM) having a subscription to a service provided by the MNO, similar to as described in connection with Figure 5. In the following, the entity carrying out the process of Figure 9 is called an apparatus for simplicity. The apparatus is assumed to be communicatively connected to a blockchain (of the MNO) either directly or via one or more further devices or network nodes. In some embodiments, the process of Figure 9 may be carried out using the Swap defeat application installed to the apparatus.

Depending on whether the application is carried out by a terminal device comprising the SIM having a subscription to the service of the MNO or a network node of the MNO, the apparatus, being the terminal device, performs, in block 901a, the process of Figure 5 or the apparatus, being the network node, performs, in block 901b, the process of Figure 6. In either case, a smart contract relating to the subscription is assumed to be uploaded to a blockchain of the MNO as a result of execution of block 901a/b. Moreover, it is assumed that, as described previously in connection with block 607 of Figure 6, the network node of the MNO appends to the smart contract template, before it is uploaded, an (unconditional) smart contract revocation trigger enabling smart contract revocation and destruction.

The apparatus activates (or causes activation of), in block 902, the smart contract revocation trigger in the smart contract uploaded to the blockchain. As a consequence, the subscription will be revoked and the smart contract will be destroyed. If the apparatus executing the process of Figure 9 is a terminal device, it may be assumed here that the generation of the smart contract template by the network node of the MNO has been carried out such that the transfer condition is not guarded by any other conditions.

The embodiments discussed above provide at least the following technical advantages:
- The embodiments address the above listed problem 1) of service disruption to potential victims of SIM swap frauds without requiring any specialized system software such as an embedded-SIM (eSim). Moreover, no in-person or over-the-phone interaction is required, which further serves to minimize the service disruption for the user.
- The embodiments address the above listed problem 2) of the loss of privacy for subscribers and a high cost for MNOs by avoiding the permanent storage of privacy-sensitive information. No scans of identity documents and the like need to be stored by the MNO. The information pertaining to the subscriber's identity and the subscriber's contract with the MNO is stored only in encrypted form and is therefore unintelligible to anyone except for the subscriber and the MNO. Additionally, the information needed for the subscriber number transfer may be stored in a distributed fashion for maximal service availability.
- The embodiments address the above listed problem 3) of complete reliance on third parties by eliminating the involvement of third parties in the process of verifying subscriber identity through external means such as identity documents, confirmation emails, or backup phone numbers. Using cryptography, the embodiments establish a reproducible but unforgeable subscriber identity in the registration phase and uses it to "unlock" the SIM transfer to the new device when the old one is damaged or lost.

The blocks, related functions, and information exchanges described above by means of Figures 2 to 9 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Figure 10 provides an apparatus 1001 according to some embodiments. Specifically, Figure 10 may illustrate an apparatus 1001 being a terminal device or a network node of an MNO. Here, the terminal device may be assumed to comprise one or more SIMs, each of which may be removable or non-removable and/or hardware-based and/or software-based.

The apparatus 1001 may comprise one or more communication control circuitry 1020, such as at least one processor, and at least one memory 1030, including one or more algorithms 1031 (instructions), such as a computer program code (software) wherein the at least one memory 1030 and the computer program code (software) are configured, with the at least one processor, to cause the apparatus 1001 to carry out any one of the exemplified functionalities of the apparatus described above. Said at least one memory 1030 may also comprise at least one database 1032.

When the one or more communication control circuitry 1020 comprises more than one processor, the apparatus 1001 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more communication control circuitry 1020 may comprise at least one Qualcomm Snapdragon and/or Intel Atom processor. The one or more communication control circuitry 1020 may comprise at least one application-specific integrated circuit (ASIC). The one or more control circuitry 1020 may comprise at least one field-programmable gate array (FPGA).

Referring to Figure 10, the one or more communication control circuitry 1020 of the apparatus 1001 are configured to carry out functionalities of the apparatus described above by means of any of Figures 2 to 9 using one or more individual circuitries. It is also feasible to use specific integrated circuits, such as ASIC (Application Specific Integrated Circuit) or other components and devices for implementing the functionalities in accordance with different embodiments.

Referring to Figure 10, the apparatus 1001 may further comprise different interfaces (I/F) 1010 such as one or more communication interfaces comprising hardware and/or software for realizing communication connectivity according to one or more communication protocols. The one or more communication interfaces 1010 may comprise, for example, at least one communication interface between the apparatus 1001 and a blockchain. If the apparatus is a terminal device, the one or more communication interfaces 1010 may comprise at least one communication interface between the apparatus 1001 and a network node of the MNO communicatively connected to the blockchain. If the apparatus is a network node of the MNO, the one or more communication interfaces 1010 may comprise at least one communication interface between the apparatus 1001 and at least one terminal device.

The one or more communication interfaces 1010 may comprise standard well-known components such as an amplifier, filter, frequency-converter, (de)modulator, and encoder/decoder circuitries, controlled by the corresponding controlling units, and one or more antennas. The apparatus 1001 may also comprise one or more user interfaces.

If the apparatus 1001 is a terminal device, the apparatus 1001 may comprise one or more user input devices and/or interfaces for connecting one or more user input devices.

Referring to Figure 10, the memory 1030 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware.

In an embodiment, at least some of the processes described in connection with Figures 2 to 9 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations according to any one of the embodiments of Figures 2 to 9 or operations thereof. In some embodiments, at least some of the processes may be implemented using discrete components.

According to an embodiment, there is provided an apparatus (e.g., a terminal device) comprising means for performing:
receiving a smart contract template from a network node of a mobile network operator communicatively connected to a blockchain, wherein a subscriber identity module of the apparatus has a subscription to a service provided by the mobile network operator;
obtaining one or more biometric user inputs via at least one user input device comprised in the apparatus and/or communicatively connected to the apparatus;
creating a secure sketch based on the one or more biometric user inputs;
obtaining one or more further biometric user inputs via the at least one user input device;
generating a first cryptographic key and a random seed, wherein the generation of the first cryptographic key is based on the secure sketch and the one or more further biometric user inputs;
encrypting the random seed using the first cryptographic key to form ciphertext;
appending the secure sketch, the random seed and the ciphertext to the smart contract template;
creating a transfer condition for triggering a transfer of the subscription to another subscriber identity module as a smart contract trigger, wherein the transfer condition is defined to be satisfied when a received input matches the ciphertext;
appending the transfer condition to the smart contract template; and
transmitting the smart contract template, appended with the secure sketch, the random seed, the ciphertext and the transfer condition, to the network node of the mobile network operator for uploading a smart contract formed based on the transmitted smart contract template to the blockchain.

According to an embodiment, there is provided an apparatus (e.g., a terminal device) comprising means for performing:
reading a secure sketch and a random seed from a smart contract comprised in a blockchain of a mobile network operator, wherein the smart contract is a contract between a subscriber of a service of the mobile network operator and the mobile network operator, and the secure sketch has been created based on one or more biometric user inputs of a user;
obtaining one or more biometric user inputs via at least one user input device; generating a first cryptographic key based on the secure sketch and the one or more biometric user inputs;
encrypting the random seed using the first cryptographic key to form ciphertext; and
transmitting the ciphertext to the blockchain for activating a transfer condition in the smart contract comprised in the blockchain causing a transfer of a subscription to the service provided by the mobile network operator from a current subscriber identity module to a subscriber identity module of the apparatus.

According to an embodiment, there is provided an apparatus (e.g., a network node of an MNO) comprising means for performing:
generating a smart contract template for a subscriber of a service provided by a mobile network operator associated with the apparatus;
transmitting the smart contract template to a terminal device comprising a subscriber identity module associated with the subscriber;
receiving, from the terminal device, the smart contract template appended with a secure sketch, a random seed, ciphertext and a transfer condition for triggering a transfer of the subscription to another subscriber identity module as a smart contract trigger, wherein the transfer condition is defined to be satisfied when a received input matches the ciphertext, and the ciphertext has been formed by encrypting the random seed using a first cryptographic key generated based on the secure sketch, created based on one or more biometric user inputs, and on one or more further biometric user inputs; and
uploading a smart contract formed based on the smart contract template to the blockchain.

Embodiments as described may also be carried out, fully or at least in part, in the form of a computer process defined by a computer program or portions thereof. Embodiments of the methods described in connection with Figures 2 to 9 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

### INDUSTRIAL APPLICABILITY

At least some embodiments find industrial application in wireless communications.

## Claims

1. An apparatus comprising:
at least one processor; and
at least one memory storing instructions that, when executed by the at least one processor, cause the apparatus at least to perform:
receiving a smart contract template from a network node of a mobile network operator communicatively connected to a blockchain, wherein a subscriber identity module of the apparatus has a subscription to a service provided by the mobile network operator;
obtaining one or more biometric user inputs via at least one user input device comprised in the apparatus and/or communicatively connected to the apparatus;
creating a secure sketch based on the one or more biometric user inputs;
obtaining one or more further biometric user inputs via the at least one user input device;
generating a first cryptographic key and a random seed, wherein the generation of the first cryptographic key is based on the secure sketch and the one or more further biometric user inputs;
encrypting the random seed using the first cryptographic key to form ciphertext;
appending the secure sketch, the random seed and the ciphertext to the smart contract template;
creating a transfer condition for triggering a transfer of the subscription to another subscriber identity module as a smart contract trigger, wherein the transfer condition is defined to be satisfied when a received input matches the ciphertext;
appending the transfer condition to the smart contract template; and
transmitting the smart contract template, appended with the secure sketch, the random seed, the ciphertext and the transfer condition, to the network node of the mobile network operator for uploading a smart contract formed based on the transmitted smart contract template to the blockchain.

2. The apparatus of claim 1, wherein the at least one memory and the instructions are configured, with the at least one processor, to cause the apparatus to perform, before the receiving of the smart contract template:
determining whether a subscriber of the subscription has a blockchain wallet for the blockchain; and
in response to the subscriber failing to have the blockchain wallet for the blockchain, creating the blockchain wallet for the blockchain for the subscriber, wherein the creating of the blockchain wallet comprises at least generating a public-private key pair for the subscriber.

3. The apparatus of claim 2, wherein the at least one memory and the instructions are configured, with the at least one processor, to cause the apparatus to perform:
backing up the blockchain wallet to a cloud, an external portable data storage device connected to the apparatus or to a hardware cold wallet connected to the apparatus.

4. The apparatus of claim 2 or 3, wherein the at least one memory and the instructions are configured, with the at least one processor, to cause the apparatus to perform:
establishing a secure connection with the network node of the mobile network operator using a key exchange protocol employing the public-private key pair comprised in the blockchain wallet of the subscriber and a public-private key pair comprised in a blockchain wallet of the mobile network operator, wherein at least the receiving and the transmitting of the smart contract template is performed using the secure connection.

5. The apparatus of claim 4, wherein the at least one memory and the instructions are configured, with the at least one processor, to cause the apparatus to perform, as an initial step of the establishing of the secure connection:
transmitting, to the network node of the mobile network operator, an initial enrollment message for triggering the establishing of the secure connection by the network node.

6. The apparatus according to any preceding claim, wherein the at least one memory and the instructions are configured, with the at least one processor, to cause the apparatus to perform:
executing with the network node of the mobile network operator a cryptographic key generation protocol for generating a common symmetric cryptographic key to be used by the mobile network operator for encrypting a smart contract to be uploaded to the blockchain.

7. The apparatus of claim 6, wherein the at least one memory and the instructions are configured, with the at least one processor, to cause the apparatus to perform:
reading a smart contract termination policy from the smart contract comprised in the blockchain using the common symmetric cryptographic key, wherein the smart contract termination policy defines an unconditional smart contract revocation trigger for invoking destruction of the smart contract; and
activating the unconditional smart contract revocation trigger in the uploaded smart contract.

8. The apparatus according to any preceding claim, wherein the smart contract template received from the network node of the mobile network operator comprises mobile network operator filled information comprising terms of service defined by the mobile network operator and/or a mapping between a phone number of a subscriber and the subscriber identity module associated with the phone number.

9. The apparatus according to any preceding claim,
wherein both the one or more biometric user inputs and the one or more further biometric user inputs comprise at least one of: a face scan, a fingerprint scan, an iris scan, a retina scan, a hand photo, a hand scan, a palmprint scan, a palm vein scan, a finger vein scan, an ear photo or a voice sample, and/or
the at least one user input device comprises at least one of: a camera, a touchscreen, a scanning device and/or a microphone.

10. An apparatus comprising:
at least one processor; and
at least one memory storing instructions that, when executed by the at least one processor, cause the apparatus at least to perform:
reading a secure sketch and a random seed from a smart contract comprised in a blockchain of a mobile network operator, wherein the smart contract is a contract between a subscriber of a service of the mobile network operator and the mobile network operator, and the secure sketch has been created based on one or more biometric user inputs of a user;
obtaining one or more biometric user inputs via at least one user input device comprised in the apparatus and/or communicatively connected to the apparatus;
generating a first cryptographic key based on the secure sketch and the obtained one or more biometric user inputs;
encrypting the random seed using the first cryptographic key to form ciphertext; and
transmitting the ciphertext to the blockchain for activating a transfer condition in the smart contract comprised in the blockchain causing a transfer of a subscription to the service provided by the mobile network operator from a current subscriber identity module to a subscriber identity module of the apparatus.

11. The apparatus of claim 10, wherein the at least one memory and the instructions are configured, with the at least one processor, to cause the apparatus to perform:
obtaining a common symmetric cryptographic key used for encrypting the smart contract uploaded to the blockchain of the mobile network operator,
wherein the reading of the secure sketch and the random seed from the smart contract is performed using the common symmetric cryptographic key.

12. The apparatus of claim 11, wherein the obtaining of the common symmetric cryptographic key comprises:
recovering a blockchain wallet for the blockchain from a cloud, an external portable data storage device connected to the apparatus or a hardware cold wallet connected to the apparatus, wherein the blockchain wallet comprises the common symmetric cryptographic key; and
in response to receiving, as user input, a passphrase of the blockchain wallet, unlocking the blockchain wallet to obtain the common symmetric cryptographic key.

13. The apparatus according to any of claims 10 to 12,
wherein the obtained one or more biometric user inputs comprise at least one of: a face scan, a fingerprint scan, an iris scan, a retina scan, a hand photo, a hand scan, a palmprint scan, a palm vein scan, a finger vein scan, an ear photo or a voice sample, and/or
the at least one user input device comprises at least one of a camera, a one touchscreen, a scanning device or a microphone.

14. An apparatus comprising:
at least one processor; and
at least one memory storing instructions that, when executed by the at least one processor, cause the apparatus at least to perform:
generating a smart contract template for a subscriber of a service provided by a mobile network operator associated with the apparatus;
transmitting the smart contract template to a terminal device comprising a subscriber identity module associated with the subscriber;
receiving, from the terminal device, the smart contract template appended with a secure sketch, a random seed, ciphertext and a transfer condition for triggering a transfer of the subscription to another subscriber identity module as a smart contract trigger, wherein the transfer condition is defined to be satisfied when a received input matches the ciphertext, and the ciphertext has been formed by encrypting the random seed using a first cryptographic key generated based on the secure sketch, created based on one or more biometric user inputs, and on one or more further biometric user inputs; and
uploading a smart contract formed based on the smart contract template to the blockchain.

15. A method comprising:
receiving a smart contract template from a network node of a mobile network operator communicatively connected to a blockchain, wherein a subscriber identity module of an apparatus has a subscription to a service provided by the mobile network operator;
obtaining one or more biometric user inputs via at least one user input device comprised in the apparatus and/or communicatively connected to the apparatus;
creating a secure sketch based on the one or more biometric user inputs;
obtaining one or more further biometric user inputs via the at least one user input device;
generating a first cryptographic key and a random seed, wherein the generation of the first cryptographic key is based on the secure sketch and the one or more further biometric user inputs;
encrypting the random seed using the first cryptographic key to form ciphertext;
appending the secure sketch, the random seed and the ciphertext to the smart contract template;
creating a transfer condition for triggering a transfer of the subscription to another subscriber identity module as a smart contract trigger, wherein the transfer condition is defined to be satisfied when a received input matches the ciphertext;
appending the transfer condition to the smart contract template; and
transmitting the smart contract template, appended with the secure sketch, the random seed, the ciphertext and the transfer condition, to the network node of the mobile network operator for uploading a smart contract formed based on the transmitted smart contract template to the blockchain.
